# EUROPEAN PATENT APPLICATION

(11) **EP 4 098 558 A1**
(43) Date of publication of application: **07.12.2022**
(21) Application number: 21215654.1
(22) Date of filing: 17.12.2021
(51) Int. Cl.: B64C 1/32, B64C 25/58, B64D 17/80, B64D 25/00, B64D 45/04, B64C 1/14, B64C 7/00, B64C 25/00, B64C 25/30, B64C 25/52, B64C 27/00, B64D 45/06

(54) **AIRCRAFT SAFETY LIFESAVING SYSTEM**

(30) Priority: 02.06.2021 CN 202110614351; 18.11.2021 CN 202111369254
(71) Applicant: Du, Di, Dalian Liaoning 116000 (CN); Du, Yang, Siping City, Jilin Province 136099 (CN)
(72) Inventor: Du, Di, Dalian, Liaoning 116000 (CN); Du, Yang, Siping City, Jilin Province 136099 (CN); Du, Tong, Dalian City, 116000 (CN)
(74) Representative: Vesterinen, Jussi Tapio

(57) **Abstract**

The present disclosure provides an aircraft safety lifesaving system, which solves the technical problem that the aircraft lacks a device capable of assisting the aircraft to decelerate and land and buffering the descending impact force, and it is difficult to better ensure the safety of the aircraft and its staff. The lifesaving system comprises an aircraft body, wherein an openable safety cabin is provided at the top of the aircraft body, a deceleration device is provided in the safety cabin, and the deceleration device is capable of being ejected from the safety cabin to enable the aircraft body to decelerate and land; a damping and buffering mechanism is provided at the bottom of the aircraft body, the damping and buffering mechanism is telescopically provided in the vertical direction, and the damping and buffering mechanism is capable of extending to the position below the aircraft wheel body. According to the present disclosure, a safety cabin is provided at the top of the aircraft body, and a deceleration device in the safety cabin is ejected in an emergency to assist the aircraft body to decelerate; the damping and buffering mechanism extends below the wheel body, and the damping and buffering mechanism contacts with the ground first, so that the impact force when the aircraft body descends can be buffered, and serious accidents caused by the impact force when the aircraft body descends can be prevented.

## Description

### TECHNICAL FIELD

The present disclosure relates to the technical field of flight devices, in particular to an aircraft safety lifesaving system.

### BACKGROUND

An aircraft is an aircraft which is heavier than air flying in the atmosphere, in which a power device with one or more engines generates forward thrust or tensile force, and the fixed wing of the fuselage generates lift.

Because the aircraft is traveling at a high altitude, its safety performance is very important. Before each flight, the staff will check the aircraft status comprehensively and carefully, so as to improve the safety factor of the aircraft to the maximum. However, when an aircraft is traveling at a high altitude, it is still impossible to completely avoid air crashes caused by various factors. Once an air crash occurs, many people will lose their lives.

The applicant finds that there are at least the following technical problems in the prior art. In the prior art, lifesaving devices such as parachutes are equipped in the aircraft. Once the aircraft crashes, passengers and crew can use parachutes to escape from the escape exit of the cabin, but it is difficult for this manner to ensure the safety of passengers in the case of time constraints. There is no device on the aircraft that can assist in deceleration and landing, so that it can assist the aircraft to land when the aircraft has a failure.

### SUMMARY

The purpose of the present disclosure is to provide an aircraft safety lifesaving system, which solves the technical problem in the prior art that the aircraft lacks a device capable of assisting the aircraft to decelerate and land and buffering the descending impact force, and it is difficult to better ensure the safety of the aircraft and its staff. Many technical effects produced by the preferred technical scheme among the technical schemes provided by the present disclosure are described in detail hereinafter.

To achieve the above purpose, the present disclosure provides the following technical scheme.

The present disclosure provides an aircraft safety lifesaving system, comprising an aircraft body, wherein an openable safety cabin is provided at the top of the aircraft body, a deceleration device is provided in the safety cabin, and the deceleration device is capable of being ejected from the safety cabin to enable the aircraft body to decelerate and land;
a damping and buffering mechanism is provided at the bottom of the aircraft body, the damping and buffering mechanism is telescopically provided in the vertical direction, and the damping and buffering mechanism is capable of extending to the position below the aircraft wheel body to buffer the impact force when the aircraft body descends.

Preferably, the damping and buffering mechanism comprises a friction plate, a vertical strut and an elastic component, wherein:
the vertical strut is a hydraulic support provided vertically, the top end of the vertical strut is connected with the bottom of the aircraft body, and the elastic component is positioned between the vertical strut and the friction plate and connects the vertical strut and the friction plate;
the friction plate is capable of moving to the position below the wheel body when the vertical strut extends out so as to have friction with the ground for deceleration, and the elastic component is capable of elastically deforming when the friction plate contacts with the ground so as to buffer an external force.

Preferably, the friction plate extends along the length direction of the aircraft body, and more than two vertical struts are connected to both sides of the upper surface of the friction plate, and all the vertical struts are arranged at intervals along the extending direction of the friction plate;
the inclined strut is a hydraulic support, the inclined strut is arranged obliquely, and the inclined strut has a fixed end connected with the bottom of the aircraft body and a telescopic end connected with the side of the vertical strut.

Preferably, deceleration wings are also provided on both sides of the aircraft body, the deceleration wings have an arc structure protruding toward the nose, the deceleration wing is fixedly or rotatably connected with the aircraft body, there are more than two deceleration wings on each side, and all the deceleration wings located on the same side of the aircraft body are provided with m rows and n columns, where m and n are positive integers, and the deceleration wings of adjacent rows or columns are staggered.

Preferably, an interlayer is formed in the housing of the aircraft body, the interlayer is communicated with the safety cabin, a reinforcing band is accommodated in the interlayer, and the reinforcing band is fixed around the aircraft body for a circle and extends into the safety cabin;
a plurality of safety cabins are arranged at intervals along the length direction of the aircraft body, and all the deceleration devices in the safety cabin are fixedly connected with the reinforcing bands.

Preferably, the deceleration device comprises a brake parachute located on the fuselage and a brake parachute located at the tail of the aircraft body, wherein:
the brake parachute on the fuselage comprises one or more layers, and when the brake parachute has more than two layers, the bottom of the brake parachute on the upper layer is fixedly connected with the top of the brake parachute on the lower layer.

Preferably, the deceleration device comprises a propeller on the fuselage, the propeller is connected with a generator, the generator is electrically connected with a storage battery, and the storage battery is electrically connected with an electrical device in the aircraft body.

Preferably, deceleration wings are also provided on both sides of the aircraft body, the deceleration wings have an arc structure protruding toward the nose, there are more than two deceleration wings on each side, and all the deceleration wings located on the same side of the aircraft body are arranged at intervals in the length direction of the aircraft body.

Preferably, the deceleration wing is rotatably connected with the aircraft body, and a hydraulic rod assembly is provided between the side of the deceleration wing away from the nose and the aircraft body;
the hydraulic rod assembly comprises one or more hydraulic rod bodies, the fixed ends of the hydraulic rod bodies are fixedly connected with the aircraft body, and the telescopic ends of the hydraulic rod bodies are fixedly connected with the deceleration wing;
the deceleration wing has an unfolded state and a folded state, and the hydraulic rod is capable of pushing the deceleration wing to rotate in the direction away from the aircraft body when extending out, so that the deceleration wing is in the unfolded state; the hydraulic rod is capable of pulling the deceleration wing to rotate in the direction close to the aircraft body when contracting, so that the deceleration wing is in the folded state;
an escape exit is provided at the position corresponding to each deceleration wing on the aircraft body, and the escape exit is capable of being covered by the deceleration wing in the folded state;
the escape exit is provided with a push-pull door body; and an extendable escape ladder is provided at the escape exit.

Preferably, the aircraft body is provided with a first driving assembly, and the first driving assembly comprises a first driving device and a turntable, wherein:
the deceleration wing and the hydraulic rod assembly are both provided on the turntable, more than two first driving devices are drivingly connected with the same turntable, the output shaft of the first driving device is provided with a transmission gear, the turntable is provided with a gear part in the circumferential direction, the gear part is meshed with the transmission gear, and when rotating synchronously, the first driving device connected to the same turntable is capable of driving the turntable and the deceleration wing on the turntable to rotate, so that the windward side of the deceleration wing rotates at the position between the front of the aircraft body and the upper part of the aircraft body.

Preferably, the aircraft body is further provided with a thrust turbine engine and a reverse thrust turbine engine, the injection port of the thrust turbine engine is provided towards the rear of the aircraft body; the reverse thrust turbine engine is connected with a second driving assembly, and the second driving assembly comprises a second driving device, a rotating disk and a connecting part, wherein:
the output ends of more than two second driving devices are drivingly connected with the same rotating disk, the end of the connecting part is connected with the reverse thrust turbine engine, the middle part of the connecting part is connected with the rotating disk, and when rotating synchronously, the second driving device connected to the same rotating disk is capable of driving the rotating disk, the connecting part on the rotating disk and the reverse thrust turbine engine to rotate, so that the injection port of the reverse thrust turbine engine rotates at the position between the front of the aircraft body, the lower part of the aircraft body and the upper part of the aircraft body.

As an alternative embodiment, the fuselage is also provided with a deceleration device, a hydraulic rod and a pull rod, wherein:
the deceleration device extends along the length direction of the fuselage, the deceleration device is rotatably connected with the fuselage near the inner side of the fuselage, the upper end of the deceleration device is connected with the hydraulic rod, the fixed end of the hydraulic rod is hinged with the fuselage, the telescopic end of the hydraulic rod is hinged with the upper surface of the middle part of the deceleration device, both ends of the pull rod are connected with the fuselage and the lower surface of the middle part of the deceleration device, respectively, and the pull rod is a telescopic rod; and there is a folded state and an unfolded state between the deceleration device and the fuselage.

Compared with the prior art, the aircraft safety lifesaving system provided by the present disclosure has the following beneficial effects. An openable safety cabin is provided at the top of the aircraft body. The deceleration device in the safety cabin is capable of being ejected to assist the aircraft body to decelerate and descend, thereby preventing the aircraft from directly losing control and crashing on the basis of striving for more escape time for passengers and flight attendants. A damping and buffering mechanism is provided at the bottom of the aircraft body. The damping and buffering mechanism is located above the wheel body when the aircraft is flying normally. In case of emergency, the damping and buffering mechanism extends to the position below the wheel body. When the aircraft contacts with the ground, the damping and buffering mechanism contacts with the ground first, so that the impact force when the aircraft body descends can be buffered, and serious accidents caused by the impact force when the aircraft body descends can be prevented so as not to threaten the safety of passengers and important parts in the aircraft, and the safety of life and property caused by the fact that the aircraft is out of control is reduced.

### BRIEF DESCRIPTION OF THE DRAWINGS

In order to explain the embodiments of the present disclosure or the technical scheme in the prior art more clearly, the drawings needed in the embodiments will be briefly introduced hereinafter. Obviously, the drawings in the following description are only some embodiments of the present disclosure. For those skilled in the art, other drawings can be obtained according to these drawings without paying creative labor.
FIG. 1 is a schematic structural diagram of a deceleration device in an aircraft body in a safety cabin;
FIG. 2 is a schematic structural diagram of a deceleration device of a first embodiment when it is opened;
FIG. 3 is a schematic diagram of the state when the aircraft is about to land in a first embodiment;
FIG. 4 is a front diagram of a first embodiment of an aircraft safety lifesaving system;
FIG. 5 is a schematic diagram of the matching structure of a safety cabin, a reinforcing band and a deceleration device;
FIG. 6 is a schematic structural diagram of a deceleration device of a second embodiment when it is opened;
FIG. 7 is a schematic diagram of the state when the aircraft is about to land in a second embodiment;
FIG. 8 is a front diagram of a second embodiment of an aircraft safety lifesaving system;
FIG. 9 is a schematic structural diagram of a damping and buffering mechanism;
FIG. 10 is a schematic structural diagram of a deceleration device of a third embodiment when it is opened;
FIG. 11 is a schematic structural diagram of the state when the propeller is rotating;
FIG. 12 is a front diagram of a third embodiment of an aircraft safety lifesaving system;
FIG. 13 is a schematic diagram of the overall structure of a deceleration wing in the unfolded state;
FIG. 14 is a schematic diagram of the overall structure of a deceleration wing in the folded state;
FIG. 15 is a schematic diagram of the matching structure of a deceleration wing, a deceleration rod assembly and an escape exit;
FIG. 16 is a schematic structural diagram of a deceleration device in the folded state;
FIG. 17 is a schematic structural diagram of a deceleration device between the folded state and the unfolded state;
FIG. 18 is a schematic structural diagram of a deceleration device in the unfolded state;
FIG. 19 is a schematic structural diagram of a deceleration device on a fuselage;
FIG. 20 is a schematic structural diagram in which a first driving device and a turntable cooperate;
FIG. 21 is a schematic structural diagram of a deceleration wing with the windward side facing upward;
FIG. 22 is a schematic structural diagram of the distribution of deceleration wings on the aircraft body;
FIG. 23 is a schematic structural diagram of a reverse thrust turbine engine and a thrust turbine engine in the first state;
FIG. 24 is a schematic structural diagram of a reverse thrust turbine engine and a thrust turbine engine in the second state;
FIG. 25 is a schematic structural diagram of the first state in which the second driving device, the rotating disk and the reverse thrust turbine engine cooperate;
FIG. 26 is a schematic structural diagram of the second state in which the second driving device, the rotating disk and the reverse thrust turbine engine cooperate;
FIG. 27 is a side view of the second state in which the second driving device, the rotating disk and the reverse thrust turbine engine cooperate;
FIG. 28 is a schematic structural diagram of the third state in which the second driving device, the rotating disk and the reverse thrust turbine engine cooperate;
FIG. 29 is a schematic structural diagram of a reverse thrust turbine engine and a thrust turbine engine in the third state;
FIG. 30 is a schematic structural bottom diagram of a aircraft body.

In the drawings, 1. Aircraft body; 2. Safety warehouse; 31. Brake parachute; 32. Propeller; 4. Reinforcing band; 5. Damping and buffering mechanism; 51. Friction plate; 52. Vertical strut; 53. Elastic component; 54. Inclined strut; 6. Storage battery; 7. Generator; 8. Interlayer; 9. Deceleration wing; 10. Hydraulic rod body; 11. Escape exit; 12. Hydraulic rod; 13. Pull rod; 14. Deceleration device; 15. Second brake parachute; 16. Turntable; 161. Gear part; 17. First driving device; 171. Transmission gear; 18. Reverse thrust turbine engine; 181. Injection port; 182. Second driving device; 183. Rotating disk; 184. Connecting part; 19. Thrust turbine engine.

### DESCRIPTION OF THE EMBODIMENTS

In order to make the purpose, technical scheme and advantages of the present disclosure clearer, the technical scheme of the present disclosure will be described in detail below. Obviously, the described embodiments are only some embodiments of the present disclosure, rather than all of the embodiments. Based on the embodiments of the present disclosure, all other embodiments obtained by those skilled in the art without paying creative labor belong to the scope of protection of the present disclosure.

In the description of the present disclosure, it should be understood that the orientation or positional relationships indicated by the terms "center", "length", "width", "height", "upper", "lower", "front", "rear", "left", "right", "vertical", "horizontal", "top", "bottom", "inner", "outer", "side", etc. are based on the orientation or positional relationships shown in the drawings, which are only for the convenience of describing the present disclosure and simplifying the description, but do not indicate or imply that the referred devices or elements must have a specific orientation and be constructed and operated in a specific orientation, and therefore cannot be understood as limiting the present disclosure. In the description of the present disclosure, unless otherwise specified, "a plurality of" means two or more.

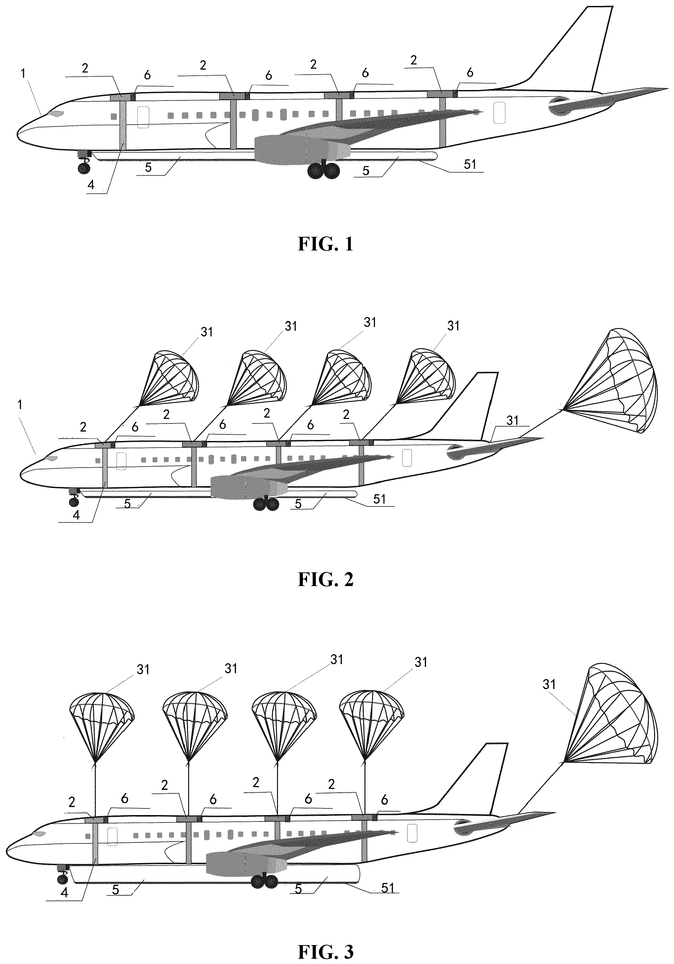

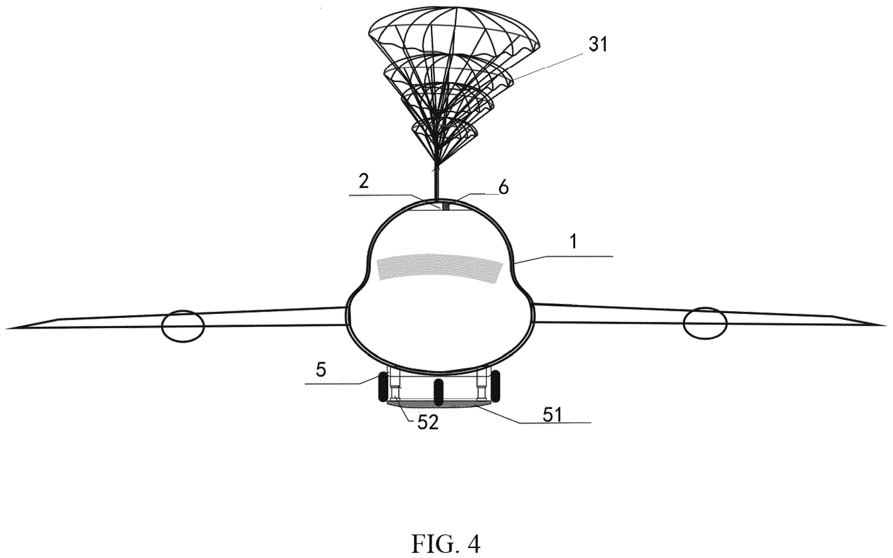

The technical scheme provided by the present disclosure will be described in more detail with reference to FIGS. 1- 15.

### Embodiment 1

As shown in FIG. 1 to FIG. 15, this embodiment provides an aircraft safety lifesaving system, which comprises an aircraft body 1. An openable safety cabin 2 is provided at the top of the aircraft body 1. A deceleration device is provided in the safety cabin 2, and the deceleration device is capable of being ejected from the safety cabin 2 to enable the aircraft body 1 to decelerate and land. A damping and buffering mechanism 5 is provided at the bottom of the aircraft body 1, the damping and buffering mechanism 5 is telescopically provided in the vertical direction, and the damping and buffering mechanism 5 is capable of extending to the position below the aircraft wheel body to buffer the impact force when the aircraft body 1 descends.

In the aircraft safety lifesaving system of this embodiment, an openable safety cabin 2 is provided at the top of the aircraft body 1. The deceleration device in the safety cabin 2 is capable of being ejected to assist the aircraft body 1 to decelerate and descend, thereby preventing the aircraft from directly losing control and crashing on the basis of striving for more escape time for passengers and flight attendants. A damping and buffering mechanism is 5 provided at the bottom of the aircraft body 1. The damping and buffering mechanism 5 is located above the wheel body when the aircraft is flying normally. In case of emergency, the damping and buffering mechanism 5 extends to the position below the wheel body. When the aircraft contacts with the ground, the damping and buffering mechanism 5 contacts with the ground first, so that the impact force when the aircraft body 1 descends can be buffered, and serious accidents caused by the impact force when the aircraft body 1 descends can be prevented so as not to threaten the safety of passengers and important parts in the aircraft, and the safety of life and property caused by the fact that the aircraft is out of control is reduced.

The damping and buffering mechanism 5 of this embodiment can generate sliding friction with the ground when contacting with the ground to assist the aircraft body 1 to decelerate, and generate elastic deformation to buffer the vertical downward impact force.

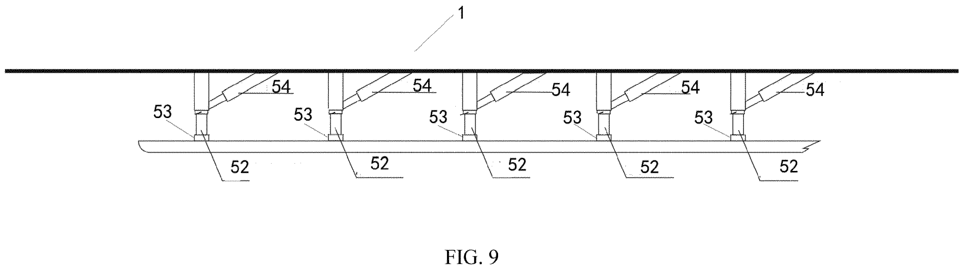

Specifically, the embodiment provides a specific implementation of a damping and buffering mechanism 5. As shown in FIG. 9, the damping and buffering mechanism 5 of this embodiment comprises a friction plate 51, a vertical strut 52 and an elastic component 53, wherein the vertical strut 52 is a hydraulic support provided vertically, the top end of the vertical strut 52 is connected with the bottom of the aircraft body 1, and the elastic component 53 is positioned between the vertical strut and the friction plate 51 and connects the vertical strut and the friction plate; the friction plate 51 is capable of moving to the position below the wheel body when the vertical strut extends out so as to have friction with the ground for deceleration, and the elastic component 53 is capable of elastically deforming when the friction plate 51 contacts with the ground so as to buffer an external force.

The friction plate 51 can be made of wear-resistant materials such as a carbon fiber composite plate, which can reduce its own weight. When an aircraft lands, it usually still has a certain horizontal speed, and the friction plate 51 can generate sliding friction with the ground. The sliding friction is used to assist the aircraft to decelerate quickly. The hydraulic support as the vertical strut 52 is telescopically provided, which can lift the friction plate 51 to the position above the aircraft wheel body when the aircraft slides normally, so as to prevent the aircraft body 1 from sliding normally. When the aircraft lands due to accident, the vertical strut 52 extends out and pushes out the friction plate 51 to the position below the wheel, so that the friction plate 51 first contacts the ground. The elastic component 53 is vertically arranged, and can be elastically deformed in the vertical direction when contacting with the ground, so as to buffer the impact force in the vertical direction and prevent the aircraft from being seriously damaged by a large impact external force when landing.

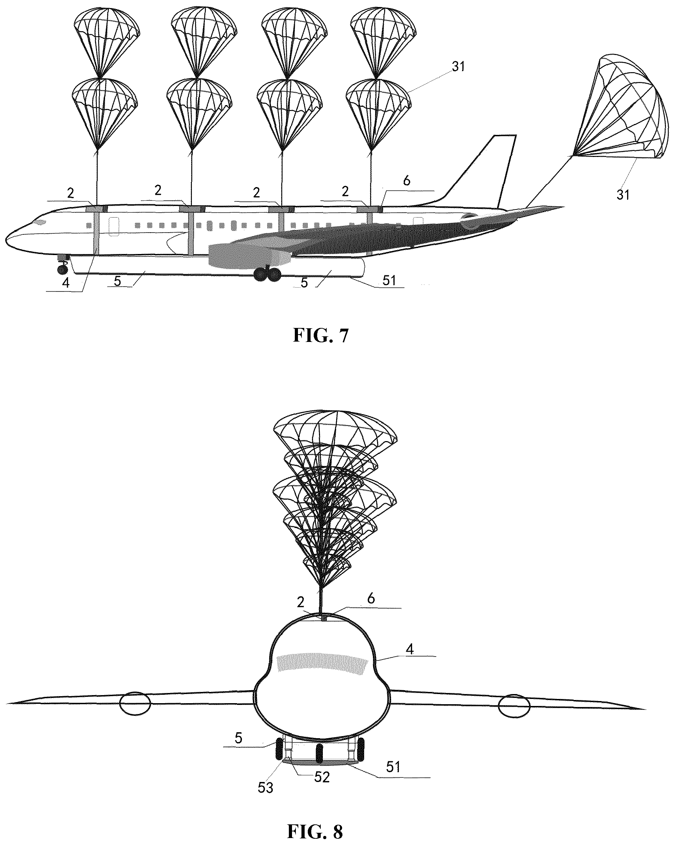

Specifically, as shown in FIG. 9, the friction plate 51 extends along the length direction of the aircraft body 1 to ensure that there is enough contact area between the aircraft and the ground during taxiing. More than two vertical struts are connected to both sides of the upper surface of the friction plate 51. The vertical struts connect multiple positions of the friction plate 51 with the bottom of the aircraft to ensure the stability of the structure. As shown in FIG. 8, all the vertical struts are arranged at intervals along the extending direction of the friction plate 51, so that the friction plate 51 is horizontally arranged. While ensuring the stability of the friction plate 51, the dead weight of the whole aircraft can be reduced. The friction between the friction plate 51 and the ground occurs in the horizontal direction, thus rapidly reducing the speed of the aircraft in the horizontal direction.

As an optional embodiment, as shown in FIG. 9, the damping and buffering mechanism 5 of this embodiment further comprises an inclined strut 54, the inclined strut 54 is a hydraulic support, the inclined strut 54 is arranged obliquely, and the inclined strut has a fixed end connected with the bottom of the aircraft body 1 and a telescopic end connected with the side of the vertical strut. The inclined strut is in the extending state. When the aircraft lands, because the sliding friction between the friction plate 51 and the ground is horizontally backward, the horizontal component force of the supporting force of the inclined strut on the vertical strut can offset the horizontal backward impact force on a part of the vertical strut, thus ensuring the structural strength and stability of the vertical strut and the entire damping and buffering mechanism 5.

The damping and buffering mechanism 5 in this embodiment has the following functions. First, when the aircraft normally flies and lands, once the landing gear fails to open, it will result in friction between the aircraft body 1 and the ground, causing serious damage to the fuselage. When the landing gear fails to open normally, the damping and buffering mechanism 5 of this embodiment can extend to the position below the wheel body, and the friction plate 51 made of wear-resistant material contacts with the ground to have sliding friction, so as to prevent damage caused by friction between the fuselage and the ground. The damping and buffering mechanism can act as the landing gear, assist the aircraft body to slide, and at the same time play a damping role in the taxiing process. The damping and buffering mechanism 5 in this embodiment has double functions to ensure the safe landing of the aircraft, which is safer. Second, when the aircraft has a mechanical failure in flight in the air, the vertical strut extends out and pushes the friction plate 51 to the position below the wheel, so that the friction plate 51 contacts with the ground. The friction force is used to assist the aircraft to decelerate quickly to prevent the aircraft from crashing. The elastic component 53 can buffer the impact force in the vertical direction, and prevent the aircraft from being seriously damaged by a large impact force when landing. Third, the damping and buffering mechanism 5 and the aircraft body engine are two independent power supply systems, and the damping and buffering mechanism 5 can be connected with a storage battery. When the engine breaks down, the damping and buffering mechanism 5 can also work, which is safer.

On the basis of the above embodiments, a specific implementation of the deceleration device 3 is provided below:

### Embodiment 2

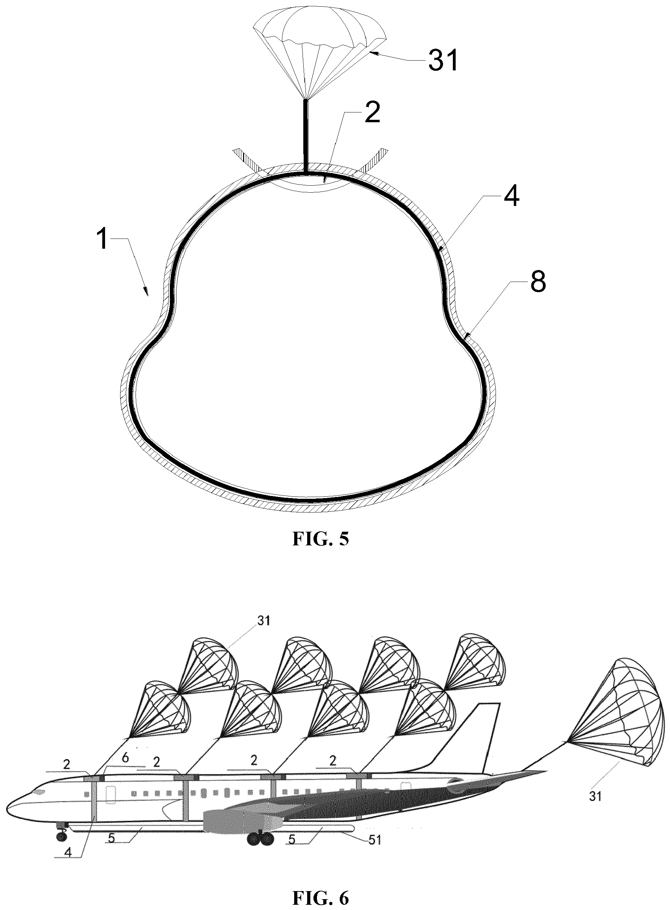

The deceleration device is located in the safety cabin 2, and is ejected from the safety cabin 2 when the aircraft encounters an accident. The deceleration device is still fixedly connected with the aircraft body 1 after being ejected, providing upward buoyancy for the aircraft body 1 and preventing the aircraft body 1 from directly crashing out of control. In order to ensure the stable connection between the aircraft body 1 and the deceleration device and prevent them from being separated when the external force is large, as an optional embodiment, as shown in FIG. 5, an interlayer 8 is formed in the housing of the aircraft body 1, the interlayer 8 is communicated with the safety cabin 2, a reinforcing band 4 is accommodated in the interlayer 8, and the reinforcing band 4 is fixed around the aircraft body 1 for a circle and extends into the safety cabin 2. The deceleration device is connected with the reinforcing band 4, which is equivalent to being in contact with the aircraft body 1 for a circle. Compared with the structure in which the deceleration device is directly connected and fixed to a certain point or several points on the top of the aircraft body 1, the connecting structure of this embodiment can ensure the aircraft body 1 and the deceleration device to be in surface contact and connected with each other through the reinforcing band 4, ensuring the contact area therebetween, thus ensuring the stability of the connecting structure therebetween and preventing the aircraft body 1 and the deceleration device from being separated.

As shown in FIG. 1, FIG. 2, FIG. 6 and FIG. 7, a plurality of safety cabins 2 are arranged at intervals along the length direction of the aircraft body 1, so that a plurality of deceleration devices are arranged at intervals along the length direction of the aircraft body 1, and all the deceleration devices in the safety cabin 2 are fixedly connected with the reinforcing band 4 to ensure the stability of the structure. The specific number of the safety cabin 2 and its deceleration devices is set according to the actual situation. The number of deceleration devices can refer to the weight of the aircraft body 1. There are many deceleration devices, which can provide greater buoyancy for the aircraft body 1.

As shown in FIGS. 2-4 and 6-8, the decelerating device of this embodiment comprises a brake parachute 31 located on the fuselage and a brake parachute 31 located at the tail of the aircraft body 1. The brake parachute 31 can adopt an expandable tower brake parachute structure such as a brake parachute in the prior art. The brake parachute 31 on the fuselage has one layer (as shown in FIGS. 2- 4) or more than two layers (as shown in FIGS. 6- 8). When the brake parachute 31 has more than two layers, as shown in FIGS. 6- 8, the bottom of the brake parachute 31 on the upper layer is fixedly connected with the top of the brake parachute 31 on the lower layer.

The brake parachute 31 located at the tail of the aircraft body 1 is mainly used to assist the aircraft to decelerate, and the brake parachute 31 located on the fuselage of the aircraft body 1 is mainly used to assist the aircraft to decelerate at the beginning of an aircraft accident, as shown in FIG. 2 and FIG. 6. After that, the brake parachute 31 at this position is in a vertical downward state, as shown in FIGS. 3 and 7, which mainly provides buoyancy for the aircraft, assists the aircraft body 1 to descend slowly, and ensures the safety of the aircraft and passengers. When the aircraft body 1 is large and heavy, due to the limited position on the fuselage, the structure of the brake parachute 31 shown in FIGS. 6- 8 can be adopted, and more than two layers of brake parachutes 31 are provided on the fuselage of the aircraft body 1 to increase the buoyancy of the brake parachute 31 on the aircraft body 1.

The ejection system used to eject the deceleration device in the safety cabin 2 is a mature existing technology, which is not described in detail here. The opening switch of the ejection system can be provided in the rear cabin to prevent passengers from false triggering. For example, the switch of the ejection system can also be provided in the safety cover, which can only be turned on after the safety cover is broken by a safety hammer to prevent false triggering.

### Embodiment 3

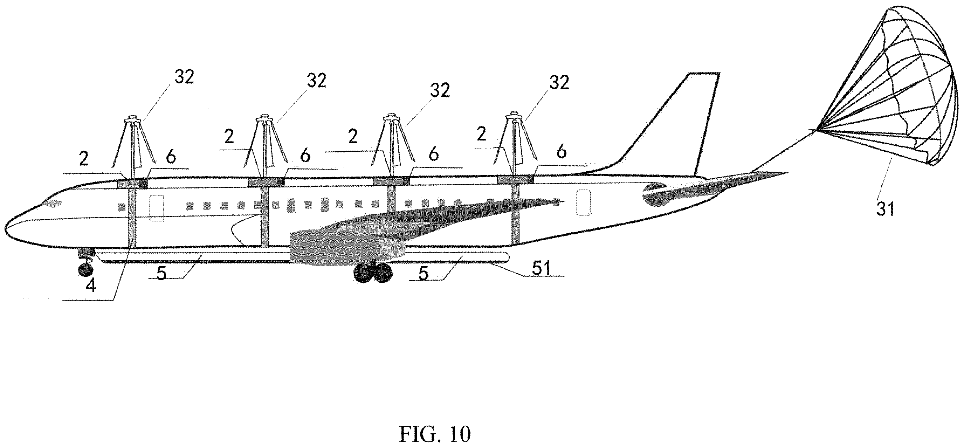

In this embodiment, another specific embodiment of the deceleration device is provided. The difference between embodiment 3 and embodiment 2 is that, as shown in FIG. 10 to FIG. 12, the deceleration device 3 of this embodiment comprises a propeller 32 located on the fuselage, and the propeller 32 is provided with one or more layers on the aircraft body 1. The rotation of the propeller 32 provides buoyancy for the aircraft body 1 to assist the aircraft body 1 to decelerate and descend, thus avoiding the direct crash of the aircraft due to accidents. The propeller 32 is connected with a power system, which is a mature technology in the aviation field and will not be described in detail here. The power system of the propeller 32 and the aircraft engine system are two independent systems. When the aircraft has an engine accident, the power system of the propeller 32 can also be used to assist the aircraft to decelerate and land. When the aircraft runs normally, the propeller 32 is located in the safety cabin 2. When the aircraft has an accident, the power system of the propeller 32 can be started to eject the propeller 32 from the safety cabin 2. In this embodiment, the power system of the propeller 32 is used as the deceleration device. Compared with the structure of the brake parachute 31, the landing place of the aircraft body 1 can be selected to prevent the aircraft body 1 from falling on the sea or cliff. The number of propellers 32 depends on the weight of the aircraft body 1.

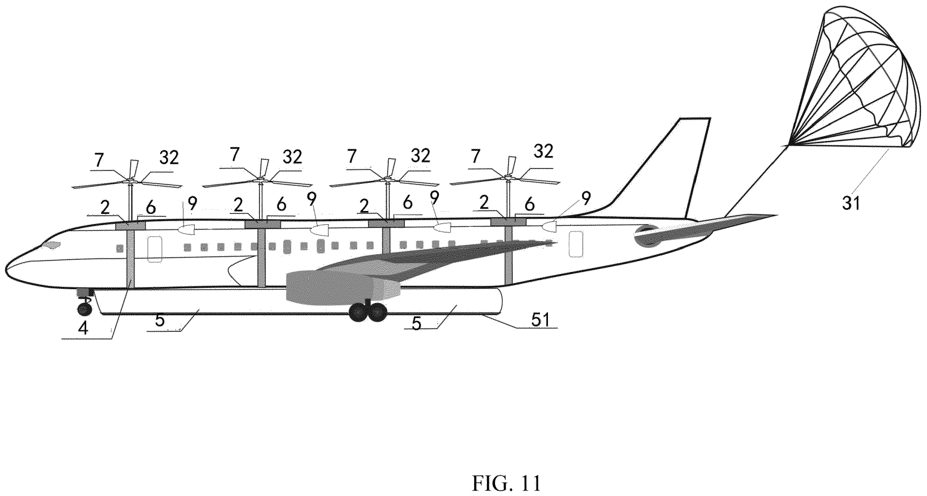

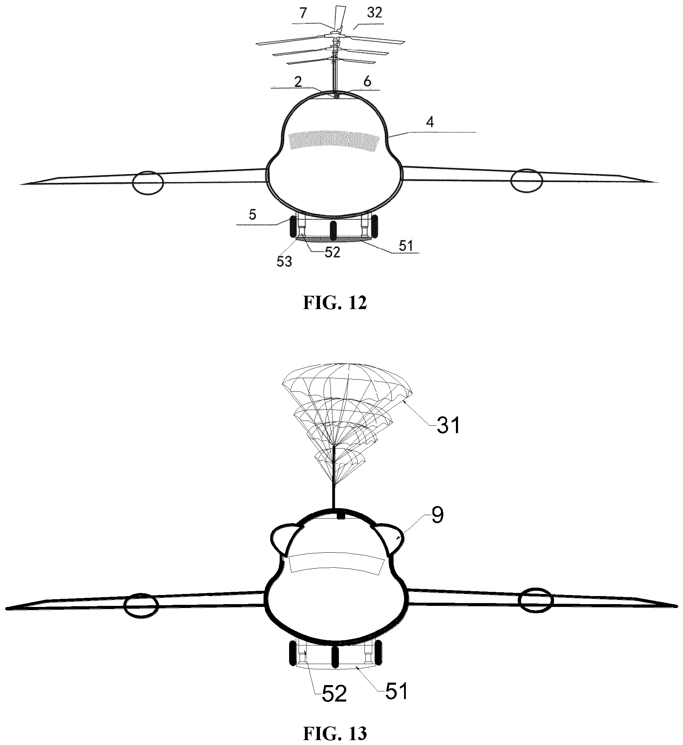

Preferably, as shown in FIG. 11 and FIG. 12, the propeller 32 is connected with a generator 7, the generator is electrically connected with a storage battery 6, and the storage battery 6 is electrically connected with an electrical device in the aircraft body 1. With the above structure, the rotating propeller 32 can be used to generate electricity, and the electric energy can be stored in the storage battery 6 to supply power to the electrical device in the aircraft, such as the power system of the propeller 32. The power supply line of the storage battery 6 is an independent power supply line of the main circuit in the aircraft, which can provide a standby line for the aircraft when the engine fails. The power generation technology of the generator 7 is a mature technology in the field, which mainly uses the external mechanical force when the propeller 32 rotates to drive the conductor coil to rotate in the magnetic field, and continuously cuts the magnetic induction line to generate the induced electromotive force, which will not be described in detail here.

### Embodiment 4

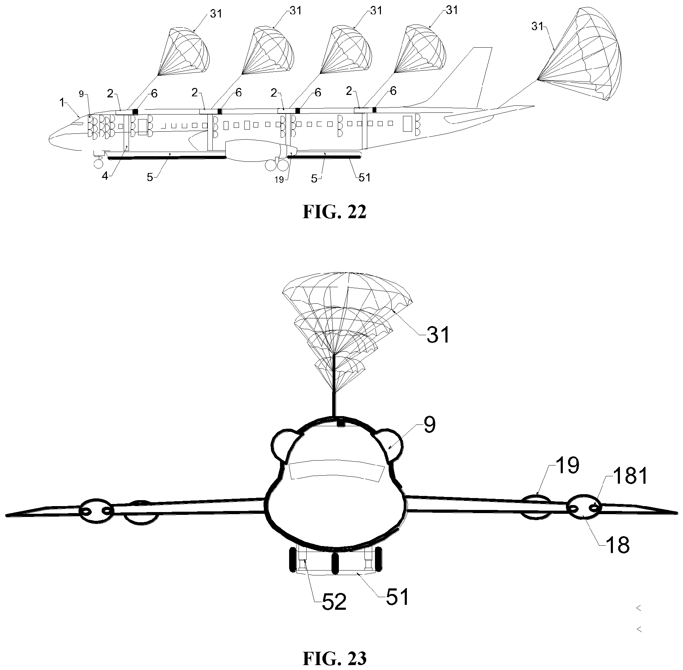

This embodiment is an improvement on the above embodiments. The aircraft body 1 uses the brake parachute 31 and/or the propeller 32 and the friction plate 51 to decelerate. In order to enable the aircraft to decelerate quickly in case of an accident, as an optional embodiment, as shown in FIG. 13 to FIG. 15, in this embodiment, deceleration wings 9 are also provided on both sides of the aircraft body 1. The deceleration wings 9 have an arc structure protruding toward the nose, there are more than two deceleration wings 9 on each side, and all the deceleration wings 9 located on the same side of the aircraft body 1 are arranged at intervals in the length direction of the aircraft body 1. As shown in FIG. 22, the deceleration wing 9 is fixedly or rotatably connected with the aircraft body 1, there are more than two deceleration wings 9 on each side, and all the deceleration wings located on the same side of the aircraft body 1 are provided with m rows and n columns on the aircraft body, where m and n are positive integers, and the deceleration wings 9 of adjacent rows or columns are staggered.

As shown in FIG. 13, a plurality of deceleration wings 9 with an arc structure on the aircraft body 1 can assist the aircraft to decelerate. A plurality of deceleration wings 9 are arranged at intervals on both sides of the aircraft body 1, as shown in FIG. 9, which can increase the wind resistance and ensure the balance of both sides of the aircraft body 1.

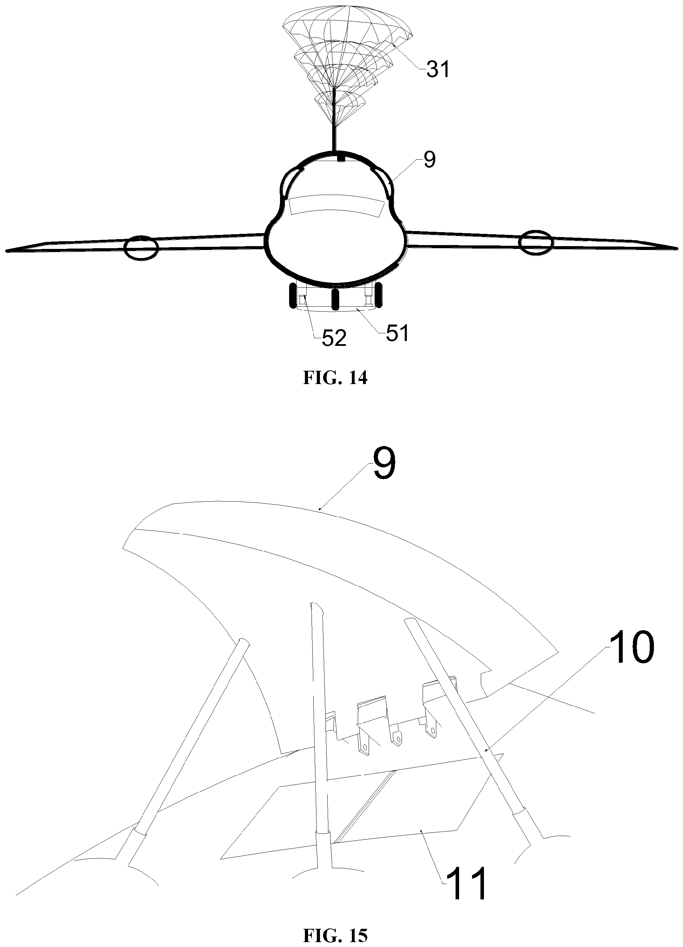

In order to reduce the influence on the speed of the deceleration wing 9 during the normal flight of the aircraft, the deceleration wing 9 in this embodiment is foldable. When the aircraft is flying normally, the deceleration wing 9 is folded, as shown in FIG. 14, to reduce the influence on the speed of the aircraft body 1. When the aircraft has an accident or needs to decelerate rapidly, as shown in FIG. 13, the deceleration wing 9 is opened to assist the aircraft body 1 to decelerate rapidly.

In this embodiment, a specific embodiment of the foldable structure of the deceleration wing 9 is provided. As shown in FIG. 15, the deceleration wing 9 is rotatably connected with the aircraft body 1. Specifically, one side of the deceleration wing 9 is hinged with the aircraft body 1, and a hydraulic rod assembly is provided between the side of the deceleration wing 9 away from the nose and the aircraft body 1. The hydraulic rod assembly comprises one or more hydraulic rod bodies 10. As shown in FIG. 15, the hydraulic cylinder assembly comprises three hydraulic rods, which connect the left and right sides and the middle position of the deceleration wing 9 with the aircraft body 1, respectively. Specifically, the fixed ends of the hydraulic rod bodies 10 are fixedly connected with the aircraft body 1, and the telescopic ends of the hydraulic rod bodies 10 are fixedly connected with the deceleration wing 9.

The deceleration wing 9 has an unfolded state (as shown in FIG. 13) and a folded state (as shown in FIG. 14). When all hydraulic rods 10 contract, the hydraulic rod can pull the deceleration wing 9 to rotate in the direction close to the aircraft body 1, so that the deceleration wing 9 is in the folded state. When all the hydraulic rods extend out, as shown in FIG. 15, the hydraulic rods push the deceleration wing 9 to rotate in the direction away from the aircraft body 1, so that the deceleration wing 9 is in the unfolded state.

The aircraft body 1 is usually provided with an emergency exit, which is convenient for passengers and crew to escape in an emergency. However, emergency exits are limited. In order to help passengers evacuate quickly in case of emergency, as an optional embodiment, as shown in FIG. 15, in this embodiment, an escape exit 11 is provided at the position corresponding to each deceleration wing 9 on the aircraft body 1, and the escape exit 11 is capable of being covered by the deceleration wing 9 in the folded state. The escape exit 11 is prevented from being opened during normal flight of the aircraft by the obstruction of the deceleration wing 9 to ensure safety. The escape exit 11 is provided with a push-pull door body, and an extendable escape ladder is provided at the escape exit 11. The escape ladder adopts the existing structure of the escape ladder on the aircraft, which will not be described in detail here. When an accident happens to the aircraft, such as engine failure, the deceleration wing 9 is opened, and at this time, passengers can push the door open and escape from the escape exit to help passengers evacuate quickly.

The aircraft body 1 of this embodiment is further provided with a laser interceptor missile system, which is a mature technology on the existing aircraft, and usually comprises a storage battery, an early warning system, a sensing system, a computer system and a launching system, and intercepts missiles and the like in case of a dangerous situation to ensure safety.

According to the aircraft safety lifesaving system of this embodiment, when an aircraft encounters a mechanical failure or a safety failure caused by human factors in the process of flying in the air, the system can help passengers strive for more escape time, assist the aircraft to descend and land, avoid the serious problem of aircraft crash and human death to a certain extent, and provide great safety guarantee for the aircraft to fly in the air.

### Embodiment 5

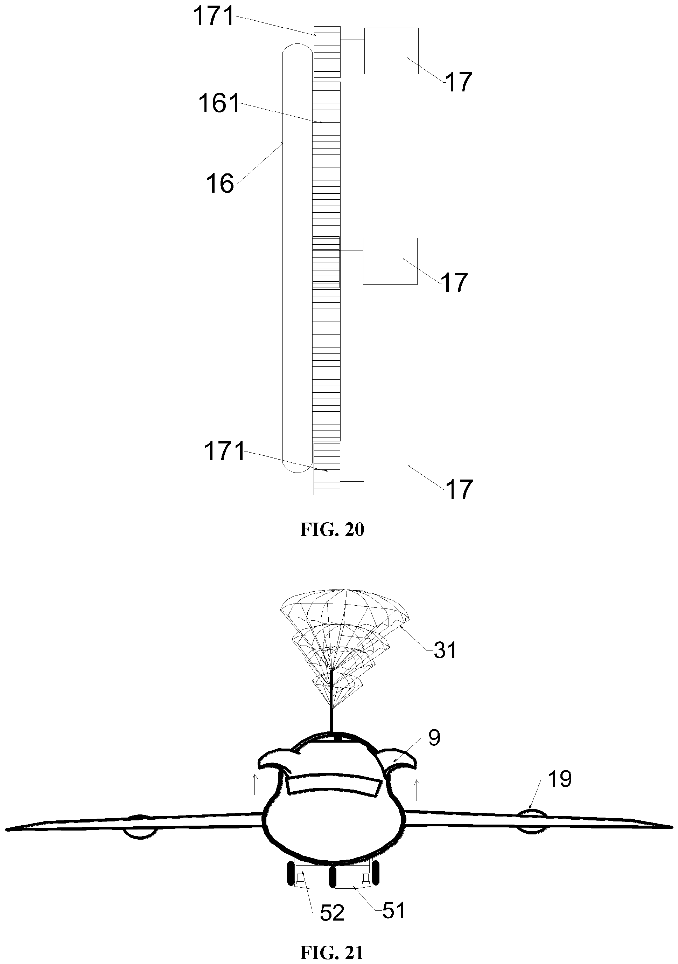

In order to make the aircraft body land more safely and stably, the deceleration wing 9 of this embodiment is rotatably provided on the aircraft body 1. As shown in FIG. 15, FIG. 20 and FIG. 21, the aircraft body 1 is provided with a first driving assembly, and the first driving assembly comprises a first driving device 17 and a turntable 16, wherein: the deceleration wing 9 and the hydraulic rod assembly are both provided on the turntable 16. As shown in FIG. 20, more than two first driving devices 17 are drivingly connected with the same turntable 16, the first driving device 17 can be a motor, the output shaft of the first driving device 17 is provided with a transmission gear 171, the turntable 16 is provided with a gear part 161 in the circumferential direction, the gear part 161 is meshed with the transmission gear171, and when rotating synchronously, the first driving device 17 connected to the same turntable 16 is capable of driving the turntable 16 and the deceleration wing 9 on the turntable 16 to rotate, so that the windward side of the deceleration wing 9 rotates at the position between the front of the aircraft body 1 and the upper part of the aircraft body 1.

The motors connected with the same turntable 16 can be electrically connected with the control system of the aircraft, so that the motors connected with the same turntable 16 can rotate synchronously in the same direction. As shown in FIG. 15 and FIG. 20, when the motor rotates, the turntable 16 and the deceleration wing 9 on the turntable 16 are driven to rotate. As shown in FIG. 13, when the windward side of the deceleration wing 9 is provided in front of the aircraft body, the resistance to decelerate the aircraft body 1 can be generated, which is beneficial to the deceleration of the aircraft. As shown in FIG. 21, when the windward side of the deceleration wing 9 is provided above the aircraft body, the resistance to prevent the aircraft body 1 from descending can be generated, which is beneficial to the slow and steady descent of the aircraft body.

When the aircraft encounters a crisis situation, the deceleration wing can be unfolded to first slow down the forward speed of the aircraft. When the forward speed of the aircraft is reduced to a certain degree, the deceleration wing 9 is rotated by 90 degrees through the first driving assembly, and the windward side of the deceleration wing 9 is upward to generate upward resistance, so that the aircraft body 1 slowly descends. When the windward side of the deceleration wing 9 is upward, the deceleration wing can cooperate with a parachute and other structures so that the aircraft body 1 descends more smoothly.

### Embodiment 6

In case of emergency, in order to further enable the aircraft body to land smoothly and safely, as shown in FIG. 23 to FIG.27, the aircraft body is further provided with a thrust turbine engine 19 and a reverse thrust turbine engine, and the injection port of the thrust turbine engine 19 is provided towards the rear of the aircraft body. The specific injection structures of the thrust turbine engine 19 and the reverse thrust turbine engine are the same, and both of them are mature existing technologies in this field. As the conventional propulsion mechanism of the aircraft, the structures will not be described in detail here.

The thrust turbine engine 19 pushes to the rear of the aircraft body, so that the aircraft body generates forward thrust, and the structure is the existing conventional structure of the aircraft. When the aircraft needs to land in an emergency, the reverse thrust turbine engine can play the role of reducing the forward speed of the aircraft and assisting the aircraft to land slowly. Specifically, as shown in FIG. 23 to FIG. 27, the reverse thrust turbine engine of this embodiment is connected with a second driving assembly, and the second driving assembly comprises a second driving device 182, a rotating disk 183 and a connecting part 184, wherein: the second driving device 182 can be a steering engine, etc. The output ends of more than two second driving devices 182 are drivingly connected with the same rotating disk 183, that is, the steering wheels of a plurality of steering engines are connected with the same rotating disk 183. The end of the same connecting part 184 is connected with the reverse thrust turbine engine. The middle part of the connecting part 184 is connected with the rotating disk 183. When rotating synchronously, the second driving device 182 (such as the steering engine) connected to the same rotating disk 183 is capable of driving the rotating disk 183, the connecting part 184 on the rotating disk 183 and the reverse thrust turbine engine to rotate, so that the injection port 181 of the reverse thrust turbine engine rotates at the position between the front of the aircraft body, the lower part of the aircraft body and the upper part of the aircraft body.

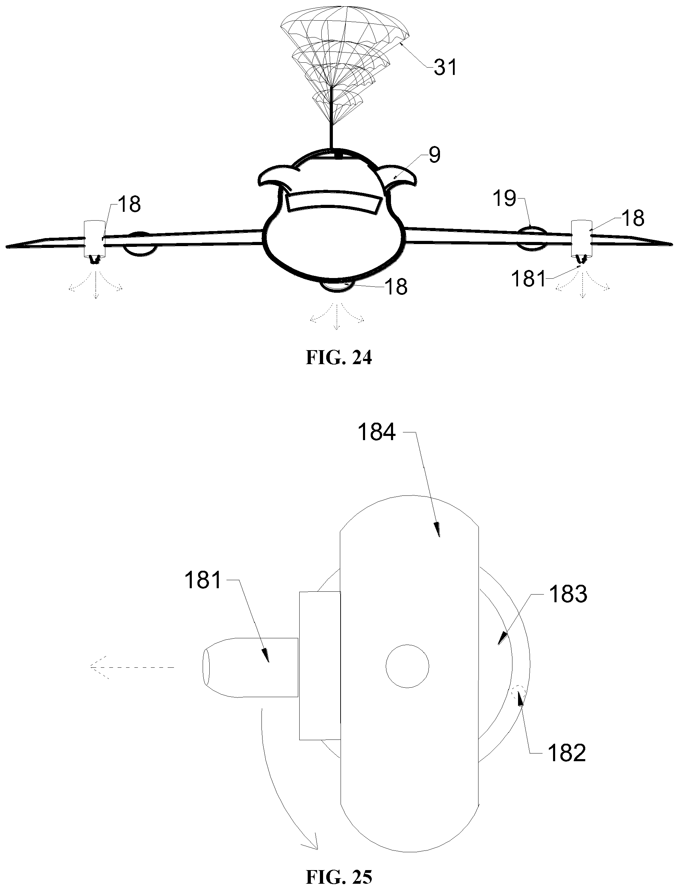

As shown in FIG. 25 to FIG. 27, a plurality of steering engines as the second driving devices 182 can provide enough power for the rotation of the rotating disk 183 by connecting their steering disks in the circumferential direction of the rotating disk 183. The center of the steering disks is connected with the reverse thrust turbine engine through connecting parts 184, and the connecting parts 184 can be connecting plates, connecting rods, connecting blocks, etc. When all the steering disks rotate synchronously, the rotating disk 183, the connecting part 184 and the reverse thrust turbine engine are driven to rotate.

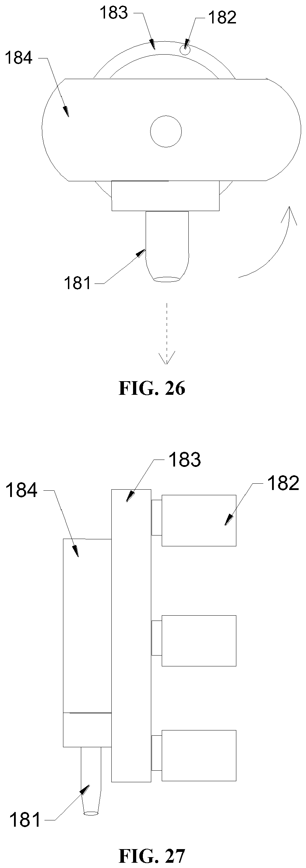

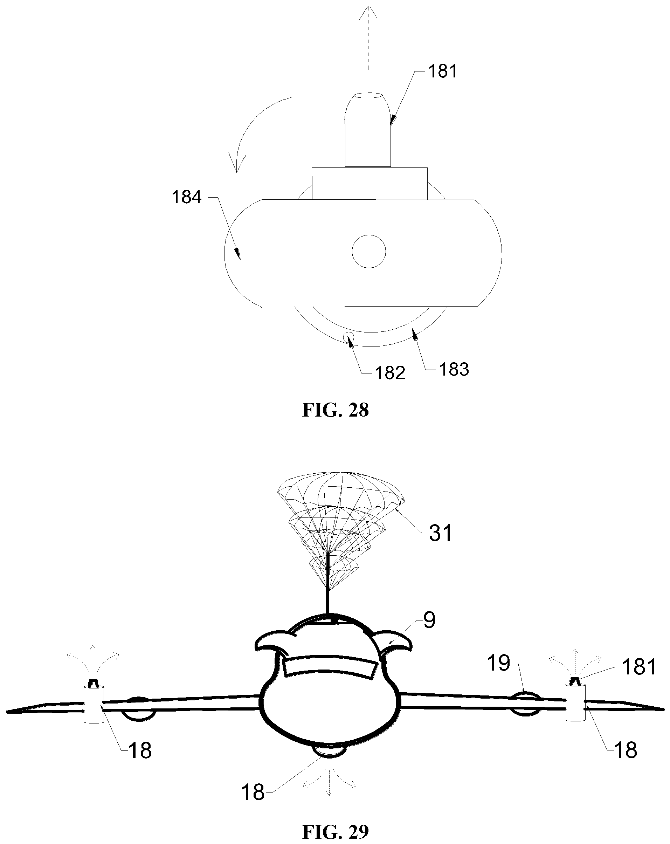

As shown in FIG. 23 and FIG. 25, the dashed arrow direction indicates the injection direction of the reverse thrust turbine engine 18, and the solid arrow direction indicates the rotation direction of the rotating disk 183. When the injection port 181 of the reverse thrust turbine engine 18 faces the front of the aircraft body 1, the backward thrust is generated to help the aircraft body 1 decelerate. After the speed of the aircraft is reduced to a certain degree, the second driving device 182 connected to the same rotating disk 183 rotates synchronously, and the rotating disk 183 rotates by 90 degrees. As shown in FIGS. 26 and 27, the injection port 181 of the reverse thrust turbine engine 18 is provided downward and generates upward thrust, which can assist the aircraft to land slowly. When the speed of the aircraft is too low, as shown in FIG. 28 and FIG. 29, the injection port 181 of the reverse thrust turbine engine 18 is provided upward, and the injection port 181 of the reverse thrust turbine engine 18 sprays upward, generating downward thrust, which can assist the aircraft to land at an appropriate speed.

In this embodiment, with the structure of the reverse thrust turbine engine, the injection port 181 can be in front of the aircraft body, above the aircraft body and below the aircraft body, assisting the aircraft body to slow down the flight speed, keeping the descending speed of the aircraft body at an appropriate speed, and further ensuring the safety of passengers in case of emergency.

The reverse thrust turbine engine 18 of this embodiment can be used with parachutes or alone.

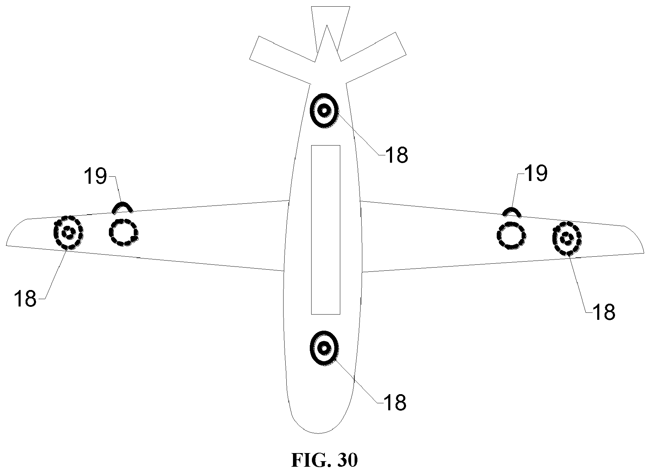

In order to keep the aircraft descending smoothly and ensure the safety of people and the aircraft, as an alternative embodiment, as shown in FIG. 30, this embodiment comprises four reverse thrust turbine engines 18, which are located on the wings on both sides, the bottom of the nose and the bottom of the tail, respectively. The reverse thrust turbine engines at the bottom of the nose and the bottom of the tail are fixedly connected to the aircraft body and do not rotate.

When the aircraft needs to land in an emergency, the reverse thrust turbine engines located at the bottom of the nose and the bottom of the tail are started to assist the aircraft to decelerate and descend. At the same time, the reverse thrust turbine engines located on the wings on both sides are started. When the injection port 181 of the reverse thrust turbine engine 18 faces the front of the aircraft body 1, the backward thrust is generated to help the aircraft body 1 decelerate. After the speed of the aircraft is reduced to a certain degree, the rotating disk 183 rotates by 90 degrees, and the injection port 181 can rotate to the upward and downward positions. When the descent speed of the aircraft body is too slow, the injection port 181 of the reverse thrust turbine engine 18 is upward. When the descent speed of the aircraft body 1 is too slow, the injection port 181 of the reverse thrust turbine engine 18 is downward, which can effectively adjust the descent speed of the aircraft and keep the balance of the fuselage.

A standby power supply is provided on the aircraft body, which can use a solar power generation device or a propeller power generation device to store electric energy in the storage battery. The power supply line of the storage battery 6 is independent from the main circuit in the aircraft, which can provide a spare line for the aircraft when the engine fails.

The aircraft body is further provided with an early warning system and a sensing system. The early warning system and the sensing system are both electrically connected with the control unit of the aircraft body and the engine of the aircraft body. When the engine failure is detected, the sensing system sends a signal to the control unit. After receiving the signal, the control unit controls the deceleration wing and the reverse thrust turbine engine to start, and the early warning system sends an alarm to remind people on the aircraft.

### Embodiment 7

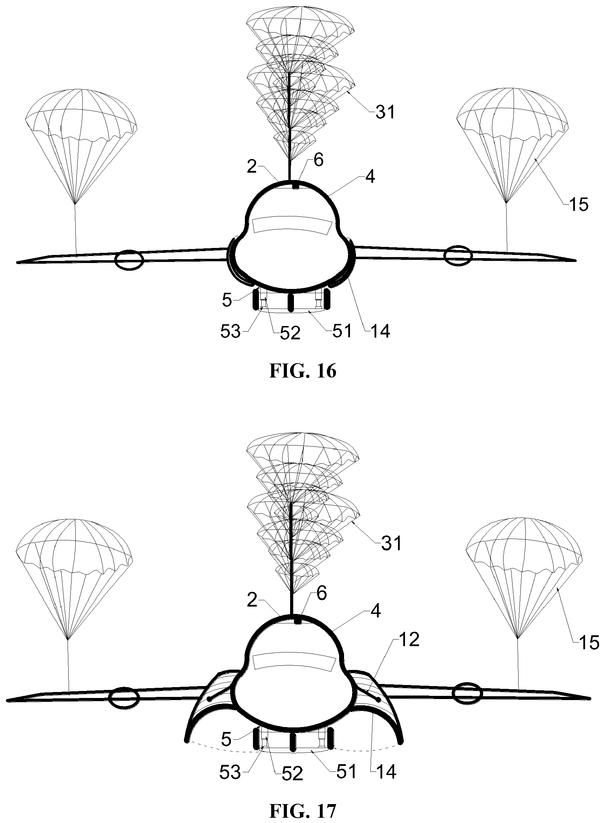

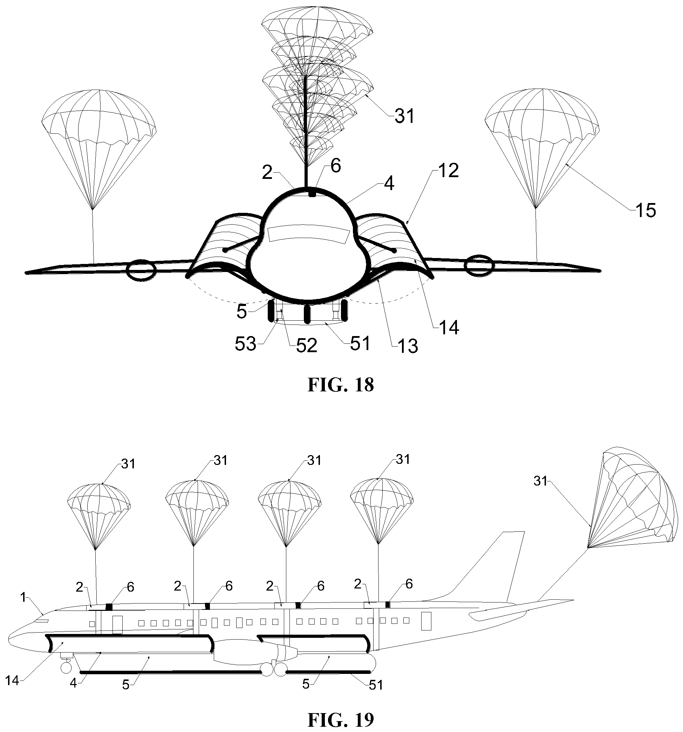

As an alternative embodiment, as shown in FIGS. 16 to 19, according to the aircraft safety lifesaving system of this embodiment, the fuselage is also provided with a deceleration device 14, a hydraulic rod 12 and a pull rod 13, wherein: as shown in FIG. 19, the deceleration device 14 extends along the length direction of the fuselage, the deceleration device 14 is rotatably connected with the fuselage near the inner side of the fuselage, the upper end of the deceleration device 14 is connected with the hydraulic rod 12, the fixed end of the hydraulic rod 12 is hinged with the fuselage, the telescopic end of the hydraulic rod is hinged with the upper surface of the middle part of the deceleration device 14, both ends of the pull rod 13 are connected with the fuselage and the lower surface of the middle part of the deceleration device 14, respectively, and the pull rod 13 is a telescopic rod.

There is a folded state and an unfolded state between the deceleration device 14 and the fuselage. As shown in FIG. 16, in the folded state, the pull rod 13 is in the contracted state, the hydraulic rod 12 is contracted, and the deceleration device 14 is folded on the fuselage. As shown in FIG. 17, FIG. 18 and FIG. 19, when the hydraulic rod 12 is extended, the deceleration device 14 is pulled to rotate, and the pull rod 13 is extended, so that the deceleration device 14 is in the unfolded state. At this time, the deceleration device 14 is beneficial to the smooth deceleration of the aircraft, helps passengers to gain more escape time, assists the aircraft to decelerate, descend and land, avoids the serious problem of aircraft crash and death to a certain extent, and provides great safety guarantee for the aircraft to fly in the air.

The deceleration device 14 can be a deceleration wing, which is provided with reinforcing ribs.

The wing is also provided with a second brake parachute 15 for assisting the aircraft to decelerate and land.

In the description of this specification, specific features, structures or characteristics may be combined in any one or more embodiments or examples in a suitable manner.

In the description of this specification, the description with reference to the terms "one embodiment", "some embodiments", "example", "specific example" or "some examples" means that the specific features, structures, materials or characteristics described in connection with this embodiment or example are included in at least one embodiment or example of the utility model. In this specification, the schematic expressions of the above terms do not necessarily refer to the same embodiments or examples. Furthermore, the specific features, structures, materials or characteristics described may be combined in any one or more embodiments or examples in a suitable manner. In addition, those skilled in the art can integrate and combine different embodiments or examples and features of different embodiments or examples described in this specification without contradicting each other.

The above is only a specific embodiment of the present disclosure, but the protection scope of the present disclosure is not limited thereto. The changes or substitutions conceivable to those skilled in the art within the technical scope disclosed by the present disclosure should be covered within the protection scope of the present disclosure. Therefore, the protection scope of the present disclosure shall be subject to the protection scope of the claims.

## Claims

1. An aircraft safety lifesaving system, comprising an aircraft body, wherein an openable safety cabin is provided at the top of the aircraft body, a deceleration device is provided in the safety cabin, and the deceleration device is capable of being ejected from the safety cabin to enable the aircraft body to decelerate and land;
a damping and buffering mechanism is provided at the bottom of the aircraft body, the damping and buffering mechanism is telescopically provided in the vertical direction, and the damping and buffering mechanism is capable of extending to the position below the aircraft wheel body to buffer the impact force when the aircraft body descends.

2. The aircraft safety lifesaving system according to claim 1, wherein the damping and buffering mechanism comprises a friction plate, a vertical strut and an elastic component, wherein:
the vertical strut is a hydraulic support provided vertically, the top end of the vertical strut is connected with the bottom of the aircraft body, and the elastic component is positioned between the vertical strut and the friction plate and connects the vertical strut and the friction plate;
the friction plate is capable of moving to the position below the wheel body when the vertical strut extends out so as to have friction with the ground for deceleration, and the elastic component is capable of elastically deforming when the friction plate contacts with the ground so as to buffer an external force.

3. The aircraft safety lifesaving system according to claim 2, wherein the friction plate extends along the length direction of the aircraft body, and more than two vertical struts are connected to both sides of the upper surface of the friction plate, and all the vertical struts are arranged at intervals along the extending direction of the friction plate;
the damping and buffering mechanism further comprises an inclined strut, the inclined strut is a hydraulic support, the inclined strut is arranged obliquely, and the inclined strut has a fixed end connected with the bottom of the aircraft body and a telescopic end connected with the side of the vertical strut.

4. The aircraft safety lifesaving system according to claim 1, wherein an interlayer is formed in the housing of the aircraft body, the interlayer is communicated with the safety cabin, a reinforcing band is accommodated in the interlayer, and the reinforcing band is fixed around the aircraft body for a circle and extends into the safety cabin;
a plurality of safety cabins are arranged at intervals along the length direction of the aircraft body, and all the deceleration devices in the safety cabin are fixedly connected with the reinforcing bands.

5. The aircraft safety lifesaving system according to claim 1 or 4, wherein the deceleration device comprises a brake parachute located on the fuselage and a brake parachute located at the tail of the aircraft body, wherein:
the brake parachute on the fuselage comprises one or more layers, and when the brake parachute has more than two layers, the bottom of the brake parachute on the upper layer is fixedly connected with the top of the brake parachute on the lower layer;
the deceleration device comprises a propeller on the fuselage, the propeller is connected with a generator, the generator is electrically connected with a storage battery, and the storage battery is electrically connected with an electrical device in the aircraft body.

6. The aircraft safety lifesaving system according to any one of claims 1 to 3, wherein deceleration wings are also provided on both sides of the aircraft body, the deceleration wings have an arc structure protruding toward the nose, the deceleration wing is fixedly or rotatably connected with the aircraft body, there are more than two deceleration wings on each side, and all the deceleration wings located on the same side of the aircraft body are provided with m rows and n columns, where m and n are positive integers, and the deceleration wings of adjacent rows or columns are staggered.

7. The aircraft safety lifesaving system according to claim 6, wherein the deceleration wing is rotatably connected with the aircraft body, and a hydraulic rod assembly is provided between the side of the deceleration wing away from the nose and the aircraft body;
the hydraulic rod assembly comprises one or more hydraulic rod bodies, the fixed ends of the hydraulic rod bodies are fixedly connected with the aircraft body, and the telescopic ends of the hydraulic rod bodies are fixedly connected with the deceleration wing;
the deceleration wing has an unfolded state and a folded state, and the hydraulic rod is capable of pushing the deceleration wing to rotate in the direction away from the aircraft body when extending out, so that the deceleration wing is in the unfolded state; the hydraulic rod is capable of pulling the deceleration wing to rotate in the direction close to the aircraft body when contracting, so that the deceleration wing is in the folded state;
an escape exit is provided at the position corresponding to each deceleration wing on the aircraft body, and the escape exit is capable of being covered by the deceleration wing in the folded state;
the escape exit is provided with a push-pull door body; and an extendable escape ladder is provided at the escape exit.

8. The aircraft safety lifesaving system according to claim 7, wherein the aircraft body is provided with a first driving assembly, and the first driving assembly comprises a first driving device and a turntable, wherein:
the deceleration wing and the hydraulic rod assembly are both provided on the turntable, more than two first driving devices are drivingly connected with the same turntable, the output shaft of the first driving device is provided with a transmission gear, the turntable is provided with a gear part in the circumferential direction, the gear part is meshed with the transmission gear, and when rotating synchronously, the first driving device connected to the same turntable is capable of driving the turntable and the deceleration wing on the turntable to rotate, so that the windward side of the deceleration wing rotates at the position between the front of the aircraft body and the upper part of the aircraft body.

9. The aircraft safety lifesaving system according to claim 6, wherein the aircraft body is further provided with a thrust turbine engine and a reverse thrust turbine engine, the injection port of the thrust turbine engine is provided towards the rear of the aircraft body; the reverse thrust turbine engine is connected with a second driving assembly, and the second driving assembly comprises a second driving device, a rotating disk and a connecting part, wherein:
the output ends of more than two second driving devices are drivingly connected with the same rotating disk, the end of the connecting part is connected with the reverse thrust turbine engine, the middle part of the connecting part is connected with the rotating disk, and when rotating synchronously, the second driving device connected to the same rotating disk is capable of driving the rotating disk, the connecting part on the rotating disk and the reverse thrust turbine engine to rotate, so that the injection port of the reverse thrust turbine engine rotates at the position between the front of the aircraft body, the lower part of the aircraft body and the upper part of the aircraft body.

10. The aircraft safety lifesaving system according to claim 1, wherein the fuselage is also provided with a deceleration device, a hydraulic rod and a pull rod, wherein:
the deceleration device extends along the length direction of the fuselage, the deceleration device is rotatably connected with the fuselage near the inner side of the fuselage, the upper end of the deceleration device is connected with the hydraulic rod, the fixed end of the hydraulic rod is hinged with the fuselage, the telescopic end of the hydraulic rod is hinged with the upper surface of the middle part of the deceleration device, both ends of the pull rod are connected with the fuselage and the lower surface of the middle part of the deceleration device, respectively, and the pull rod is a telescopic rod; and there is a folded state and an unfolded state between the deceleration device and the fuselage.
